# EUROPÄISCHE PATENTSCHRIFT

(11) **EP 1 817 107 B1**
(45) Veröffentlichungstag und Bekanntmachung des Hinweises auf die Patenterteilung: **28.11.2012**
(21) Anmeldenummer: 05795100.6
(22) Anmeldetag: 14.10.2005
(51) Int. Cl.: B01J 37/02, B01J 35/04, B01D 53/94, B01D 46/24, F01N 3/022, F01N 3/28

(54) **VERFAHREN UND VORRICHTUNG ZUM BESCHICHTEN EINER SERIE VON TRAGKÖRPERN**
METHOD AND DEVICE FOR COATING A SERIES OF SUPPORT BODIES
PROCEDE ET DISPOSITIF POUR ENDUIRE UNE SERIE DE SUPPORTS

(30) Priorität: 19.10.2004 DE 102004051099
(43) Veröffentlichungstag der Anmeldung: 15.08.2007
(73) Patentinhaber: Umicore AG & Co. KG, 63457 Hanau-Wolfgang (DE)
(72) Erfinder: FEHNLE, Oliver, 79618 Rheinfelden (DE); DETTERBECK, Dieter, 63589 Altenhasslau (DE); WIENAND, Axel, 63785 Obernburg (DE); MERGNER, Bernd, 79618 Rheinfelden (DE)
(74) Vertreter: Herrmann, Reinhard
(86) Internationale Anmeldenummer: PCT/EP2005/011051
(87) Internationale Veröffentlichungsnummer: WO 2006/042699

(56) Entgegenhaltungen:
- EP-A- 1 136 462
- EP-A- 1 273 344
- EP-A- 1 319 436
- EP-A- 1 486 248
- EP-A- 1 570 892
- WO-A-2004/091786
- WO-A1-2006/021338
- WO-A1-2006/021339

## Beschreibung

Die Erfindung betrifft ein Verfahren zum Beschichten einer Serie von Tragkörpern mit einer Beschichtungssuspension. Insbesondere betrifft die Erfindung ein Verfahren und eine Vorrichtung zum Beschichten von Tragkörpern für Katalysatoren - zum Beispiel Autoabgaskatalysatoren.

Die Tragkörper für Autoabgaskatalysatoren besitzen in der Regel eine zylindrische Form mit zwei Stirnflächen und einer Mantelfläche und werden von der ersten Stirnfläche zur zweiten Stirnfläche von einer Vielzahl von im wesentlichen parallel zur Zylinderachse liegenden Strömungskanälen für die Abgase der Verbrennungskraftmaschinen durchzogen. Diese Tragkörper werden auch als Wabenkörper bezeichnet.

Die Querschnittsform der Tragkörper hängt von den Einbauerfordernissen am Kraftfahrzeug ab. Weit verbreitet sind Tragkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Tragkörper angeordnet. Je nach Anwendungsfall variiert die Kanal- beziehungsweise Zelldichte der Strömungskanäle zwischen 10 und 140 cm⁻². Wabenkörper mit Zelldichten bis zu 250 cm⁻² und mehr sind in der Entwicklung.

Für die Reinigung der Autoabgase werden überwiegend Katalysator-Tragkörper eingesetzt, die durch Extrusion keramischer Massen gewonnen werden. Alternativ dazu stehen Katalysator-Tragkörper aus gewellten und gewickelten Metallfolien zur Verfügung. Für die Abgasreinigung von Personenkraftwagen werden heute noch überwiegend keramische Tragkörper mit Zelldichten von 62 cm⁻² eingesetzt. Die Querschnittsabmessungen der Strömungskanäle betragen in diesem Fall 1,27 x 1,27 mm². Die Wandstärken solcher Tragkörper liegen zwischen 0,1 und 0,2 mm.

Zur Umsetzung der in Autoabgasen enthaltenen Schadstoffe wie Kohlenmonoxid, Kohlenwasserstoffe und Stickoxide in unschädliche Verbindungen werden zumeist feinstverteilte Platingruppenmetalle eingesetzt, die durch Verbindungen von Unedelmetallen in ihrer katalytischen Wirkung verändert sein können. Diese katalytisch aktiven Komponenten müssen auf den Tragkörpern abgeschieden werden. Allerdings ist es nicht möglich, die geforderte feinste Verteilung der katalytisch aktiven Komponenten durch Abscheidung dieser Komponenten auf den geometrischen Oberflächen der Tragkörper zu gewährleisten. Dies gilt in gleicher Weise für die unporösen metallischen wie auch für die porösen keramischen Tragkörper. Eine ausreichend große Oberfläche für die katalytisch aktiven Komponenten kann nur durch Aufbringen einer Trägerschicht aus feinteiligen, hochoberflächigen Materialien auf die Innenflächen der Strömungskanäle zur Verfügung gestellt werden. Dieser Vorgang wird im folgenden als Beschichten des Tragkörpers bezeichnet. Die Beschichtung der äußeren Mantelfläche der Tragkörper ist unerwünscht und sollte zur Vermeidung von Verlusten an wertvollen, katalytisch aktiven Materialien vermieden werden.

Zum Beschichten der Tragkörper dient eine Suspension aus den feinteiligen, hochoberflächigen Materialien in einer flüssigen Phase, zumeist Wasser. Typische Beschichtungssuspensionen für katalytische Anwendungen enthalten als hochoberflächige Trägermaterialien für die katalytisch aktiven Komponenten zum Beispiel aktive Aluminiumoxide, Aluminiumsilicate, Zeolithe, Siliciumdioxid, Titanoxid, Zirkonoxid und Sauerstoff speichernde Komponenten auf der Basis von Ceroxid. Diese Materialien bilden den Feststoffanteil der Beschichtungssuspension. Darüber hinaus können der Beschichtungssuspension noch lösliche Vorstufen von Promotoren oder katalytisch aktiven Edelmetallen der Platingruppe des periodischen Systems der Elemente zugefügt werden. Die Feststoffkonzentration typischer Beschichtungssuspensionen liegt im Bereich zwischen 20 und 65 Gew.-%, bezogen auf das Gesamtgewicht der Suspension. Sie weisen Dichten zwischen 1,1 und 1,8 kg/l auf.

Aus dem Stand der Technik sind verschiedene Verfahren zur Abscheidung der Trägerschicht auf den Tragkörpern unter Verwendung der Beschichtungssuspension, beziehungsweise Aufschlämmung, bekannt. Zur Beschichtung können die Tragkörper zum Beispiel in die Beschichtungssuspension getaucht oder mit der Beschichtungssuspension übergossen werden. Weiterhin besteht die Möglichkeit, die Beschichtungssuspension in die Kanäle der Tragkörper zu pumpen oder einzusaugen.

In allen Fällen müssen die Tragkörper von überschüssigem Beschichtungsmaterial befreit werden, zum Beispiel durch Absaugen oder Ausblasen der Kanälen der Tragkörper mit Preßluft. Hierdurch werden auch eventuell mit Beschichtungssuspension verstopfte Kanäle geöffnet.

Nach dem Beschichten werden Tragkörper und Trägerschicht getrocknet und anschließend zur Verfestigung und Fixierung der Trägerschicht auf dem Tragkörper calciniert. Anschließend werden die katalytisch aktiven Komponenten in die Beschichtung durch Imprägnieren mit zumeist wässrigen Lösungen von Vorläuferverbindungen der katalytisch aktiven Komponenten eingebracht. Alternativ hierzu können die katalytisch aktiven Komponenten auch schon der Beschichtungssuspension selbst zugefügt werden. Ein nachträgliches Imprägnieren der fertiggestellten Trägerschicht mit den katalytisch aktiven Komponenten entfällt in diesem Fall.

Ein wesentliches Kriterium der Beschichtungsverfahren ist die mit ihnen in einem Arbeitsgang erreichbare Beschichtungs- oder Beladungskonzentration. Hierunter wird der Feststoffanteil verstanden, der nach Trocknen und Calcinieren auf dem Tragkörper zurückbleibt. Die Beschichtungskonzentration wird in Gramm pro Liter Volumen der Tragkörper angegeben (g/l). In der Praxis werden Beschichtungskonzentrationen bei Autoabgaskatalysatoren bis zu 300 g/l benötigt. Kann diese Menge mit dem verwendeten Verfahren nicht in einem Arbeitsgang aufgebracht werden, so muß der Beschichtungsvorgang nach dem Trocknen und gegebenenfalls Calcinieren des Tragkörpers so oft wiederholt werden, bis die gewünschte Beladung erreicht ist. Häufig werden zwei oder mehrere Beschichtungsvorgänge mit unterschiedlich zusammengesetzten Beschichtungssuspensionen vorgenommen. Hierdurch werden Katalysatoren erhalten, die mehrere übereinanderliegende Schichten mit unterschiedlichen katalytischen Funktionen aufweisen.

Die DE 40 40 150 C2 beschreibt ein Verfahren, mit dem Katalysator-Tragkörper in Wabenform über ihre gesamte Länge gleichmäßig mit einer Trägerschicht, beziehungsweise mit einer katalytisch aktiven Schicht, beschichtet werden können. Im folgenden werden Katalysator-Tragkörper in Wabenform auch als Wabenkörper bezeichnet. Gemäß dem Verfahren der DE 40 40 150 C2 wird die Zylinderachse des Wabenkörpers zur Beschichtung vertikal ausgerichtet. Dann wird die Beschichtungssuspension durch die untere Stirnfläche des Wabenkörpers in die Kanäle eingepumpt, bis sie an der oberen Stirnfläche austritt. Danach wird die Beschichtungssuspension wieder nach unten abgepumpt und der Tragkörper von überschüssiger Beschichtungssuspension durch Ausblasen oder Absaugen befreit, um ein Verstopfen der Kanäle zu vermeiden. Mit diesem Verfahren werden Trägerschichten erhalten, die über die gesamte Länge der Wabenkörper eine gute Gleichmäßigkeit aufweisen.

Das beschriebene Beschichtungsverfahren weist wie jeder technische Prozeß eine gewisse Schwankungsbreite der Beschichtungsmenge von Tragkörper zu Tragkörper auf. Die Schwankungsbreite hängt von der Beschaffenheit der Beschichtungssuspension und von den Eigenschaften der zu beschichtenden Wabenkörper ab.

EP-A-1136462 zeigt ein Verfahren zum teilweisen Beschichten eines zylindrischen Tragkörpers mit einer Beschichtungssuspension, wobei das Füllen des Tragkörpers von seiner unteren Stirnseite mit der Beschichtungssuspension erfolgt, die so bemessen ist, dass der Tragkörper nur bis zu einer Höhe, die einem vorbestimmten Bruchteil seiner Länge entspricht, gefüllt wird.

EP-A-1273344 zeigt ein Verfahren zum Beschichten eines zylindrischen Tragkörpers mit einer Beschichtungssuspension, wobei der Tragkörper von seiner unteren Stirnseite mit der Beschichtungssuspension teilweise beschichtet, gedreht und von der zweiten Stirnseite ebenfalls teilweise beschichtet wird, so daß auf diese Weise ein vollständig beschichteter Tragkörper erhalten wird.

EP-A-1486248 zeigt einen Dieselpartikelfilter, dessen Wandflußfilter ein- und auslaßseitig mit unterschiedlichen Beschichtungssuspensionen beschichtet ist.

WO 2004/091786 zeigt ein Verfahren zum Beschichten eines Tragkörpers, wobei der Tragkörper vor und nach der Beschichtung gewogen und stets mit einem Überschuß beschichtet und durch einen nachfolgenden Absaugschritt die Varianz der Beschichtungsmengen reduziert wird.

Die Schwankungsbreite des Beschichtungsprozesses hat einen direkten Einfluß auf die katalytische Aktivität des fertigen Katalysators, da die katalytische Aktivität unter anderem direkt von der Beladungsmenge mit den katalytisch aktiven Edelmetallen abhängt. Zur Gewährleistung einer Mindestaktivität der Katalysatoren, muß daher sichergestellt werden, daß alle Katalysatoren mindestens eine Soll-Menge an Beschichtungssuspension aufweisen. Das bedeutet, daß die Tragkörper in der Produktion um die halbe Schwankungsbreite des Beschichtungsprozesses mit der Beschichtungssuspension überladen werden müssen. Gelingt es also, die Schwankungsbreite des Beschichtungsprozesses zu verringern, so kann die notwendige Überladung entsprechend vermindert werden, und es kommt zu entsprechenden Einsparungen an wertvollen Edelmetallen und Beschichtungsrohstoffen.

Es ist daher Aufgabe der vorliegenden Erfindung ein Verfahren und eine Vorrichtung zum Beschichten von Tragkörpern, insbesondere für Katalysatoren, bereitzustellen, welches es gestattet, die auf einen Katalysatortragkörper aufgebrachte Beschichtungsmenge noch vor Abschluß des Beschichtungsverfahrens sowohl zu erhöhen als auch zu erniedrigen, so daß das Verfahren eine geringere Schwankungsbreite der Beschichtungsmenge der fertigen Beschichtung aufweist als mit vergleichbaren Verfahren aus dem Stand der Technik erreichbar ist.

Diese Aufgabe wird mit den Merkmalen gemäß den Ansprüchen gelöst.

Vor einer eingehenden Beschreibung der Erfindung sollen hier einige Begriffe erläutert werden.

Unter dem Begriff "Körper" werden im Rahmen dieser Erfindung inerte Tragkörper für katalytisch aktive Beschichtungen verstanden. In der Regel handelt es sich hierbei um sogenannte Wabenkörper aus Keramik oder Metall.

Mit Naß-Aufnahme, beziehungsweise Naß-Beschichtungsmenge oder Roh-Beschichtung, wird im folgenden die Menge der Beschichtungssuspension verstanden, die nach dem Beschichten und vor einem eventuellen Trocknungsvorgang auf den Tragkörpern verbleibt. Sie kann durch Wiegen des Tragkörpers vor und nach dem Beschichten ermittelt werden.

Trocken-Aufnahme ist dagegen die Menge des Beschichtungsmaterials, welche nach dem Trocknen und Calcinieren auf den Tragkörpern vorliegt.

Mit Soll-Menge wird im folgenden die Naß-Aufnahme verstanden, die zur Erreichung der geforderten katalytischen Aktivität unbedingt notwendig ist und von keinem beschichteten Tragkörper unterschritten werden darf.

Mit Fertig-Beschichtung wird die nach Abschluß des Verfahrens vorliegende Naß-Aufnahme bezeichnet.

Mit dem erfindungsgemäßen Verfahren kann eine Serie zylindrischer, offenporiger Körper mit mindesten einer Beschichtungssuspension, welche feste und gelöste Stoffe in einem flüssigen Medium enthält mit einer Naß-Beschichtungsmenge beschichtet werden, die mindestens einer Soll-Beschichtungsmenge entspricht.

Der Beschichtungsvorgang weist eine Schwankungsbreite der aufgebrachten Naß-Beschichtungsmenge von Körper zu Körper auf. Das Verfahren ist gekennzeichnet durch die folgenden Verfahrensschritte:
a) Anfertigen einer Roh-Beschichtung durch Beschichten der Körper mit der Beschichtungssuspension, wozu die Körper mit ihrer Zylinderachse senkrecht ausgerichtet und mit einer Stirnfläche auf eine Beschichtungsstation aufgesetzt und dann von unten mittels einer Pumpe oder aus einem unter Druck stehenden Reservoir mit der Beschichtungssuspension gefüllt und anschließend von überschüssiger Beschichtungssuspension durch Auspumpen, Aussaugen, Ausblasen oder eine Kombination dieser Aktionen befreit werden, und
b) Ermitteln der Ist-Menge der auf den Körpern aufgebrachten Roh-Beschichtung,
wobei das Verfahren durch einen weiteren Verfahrensschritt gekennzeichnet ist:
c) Korrigieren der Ist-Menge durch Entfernen von noch feuchter Beschichtungssuspension oder Aufbringen zusätzlicher Beschichtungssuspension, so daß die Beschichtungsmenge der fertigen Beschichtung innerhalb eines Toleranzfeldes oberhalb der Soll-Menge zu liegen kommt, dessen Breite geringer ist als die Schwankungsbreite der Roh-Beschichtung.

Das Verfahren ist für die Beschichtung von Tragkörpern aus Metall oder Keramik geeignet. Die Tragkörper können in Form von sogenannten Wabenköpern mit beidseitig offenen, parallelen Strömungskanälen vorliegen oder eine offenporige Schaum- oder Faserstruktur aufweisen. Mit dem Verfahren können jedoch auch sogenannte Wandflußfilter beschichtet werden, deren Strömungskanäle wechselseitig verschlossen sind, so daß das Abgas bei seinem Weg durch das Filter gezwungen wird, durch die porösen Trennwände zwischen den Strömungskanälen zu fließen.

Für die folgenden Erläuterungen der Erfindung wird von Tragkörpern mit parallelen Strömungskanälen ausgegangen, die in großen Stückzahlen als Tragkörper für Katalysatoren zur Reinigung der Abgase von Verbrennungsmotoren eingesetzt werden.

Die Beschichtung der Tragkörper in Schritt a) wird bevorzugt in einer sogenannten Beschichtungsstation vorgenommen. Aus dem Stand der Technik sind hierfür vielfältige Beispiele bekannt. Exemplarisch wird hier von einer Beschichtungsstation ausgegangen wie sie zum Beispiel in den Schriften DE 40 40 150 A1, EP 0941763 A1, EP 1136462 A1 und EP 1273344 A1 beschrieben ist.

Zur Beschichtung in einer solchen Station werden die Tragkörper mit ihrer Zylinderachse senkrecht ausgerichtet und zum Beispiel mit ihrer unteren Stirnfläche auf die Beschichtungsstation aufgesetzt und dann von unten mittels einer Pumpe oder aus einem unter Druck stehenden Reservoir mit der Beschichtungssuspension gefüllt. Anschließend werden die Tragkörper von überschüssiger Beschichtungssuspension befreit. Das kann durch Auspumpen, Aussaugen, Ausblasen oder durch eine Kombination dieser Aktionen geschehen. Danach weisen die Tragkörper auf ihren inneren Wandflächen eine Beschichtung mit der Beschichtungssuspension auf.

Die so hergestellte Beschichtung der Tragkörper wird im folgenden als Roh-Beschichtung bezeichnet. Die Beschichtungsmenge der Roh-Beschichtung hängt von der Feststoffkonzentration der Beschichtungssuspension, ihrer Viskosität und den Beschichtungsbedingungen, insbesondere den Bedingungen beim Befreien von überschüssiger Beschichtungssuspension aus den Strömungskanälen der Tragkörper ab. Dem Fachmann sind diese Zusammenhänge bekannt und er kann somit unter Berücksichtigung der Schwankungsbreite dieses Beschichtungsprozesses den Mittelwert der Ist-Beschichtungsmenge auf einen gewünschten Wert einstellen.

Die Schwankungsbreite dieses konventionellen Beschichtungsprozesses hängt von der Art der Beschichtungssuspension und weiteren Parametern des Beschichtungsprozesses ab. Gewöhnlich liegt die Schwankungsbreite bei ± 5 % bis ± 10 %. In günstigen Fällen kann sie bis auf ± 2 % vermindert werden.

Zur Verminderung der Schwankungsbreite dieses konventionellen Beschichtungsprozesses sieht die Erfindung eine Korrektur der aufgebrachten Beschichtungsmenge vor. Hierzu wird in Schritt b) die Ist-Menge der Beschichtung ermittelt. Liegt die Ist-Menge der Roh-Beschichtung unterhalb der Soll-Menge, so wird erfindungsgemäß zusätzliche Beschichtungssuspension auf den Tragkörper aufgebracht. Liegt die Ist-Menge der Roh-Beschichtung dagegen oberhalb des festgelegten Toleranzfeldes für die Fertig-Beschichtung, so wird ein Teil der noch feuchten Beschichtungssuspension vom Tragkörper entfernt. In beiden Fällen wird angestrebt, die Ist-Menge der Beschichtung mit einer einzigen Korrektur in das vorgesehene Toleranzfeld für die Fertig-Beschichtung oberhalb der Soll-Menge zu legen.

Nach der Korrektur der Beschichtungsmenge kann die neu eingestellte Ist-Menge erneut bestimmt und gegebenenfalls eine weitere Korrektur gemäß Schritt c) vorgenommen werden. Verfahrensschritt b) (Bestimmen der Ist-Menge) und Verfahrensschritt c) (Korrektur der Ist-Menge) können also iterativ mehrfach durchlaufen werden, bis eine geforderte Genauigkeit der Beschichtungsmenge erreicht ist. Im folgenden wird der Durchlauf der Verfahrensschritte b) und c) als Iterationsschleife bezeichnet.

Der Iterationsprozeß und somit der Beschichtungsprozeß wird beendet, wenn die Ist-Menge der Beschichtung innerhalb des festgelegten Toleranzfeldes für die Fertig-Beschichtung liegt.

Zur Verbesserung der axialen Gleichmäßigkeit der Beschichtung auf dem Tragkörper kann der Tragkörper zwischen zwei Iterationsschleifen um 180° um eine horizontale Achse gedreht werden, so daß in der folgenden Iterationsschleife die zuvor unten liegende Stirnfläche des Tragkörpers oben zu liegen kommt.

Die Lage des Mittelwertes der Naß-Beschichtungsmenge in Schritt a) relativ zur gewünschten Soll-Menge ist von untergeordneter Bedeutung für das Verfahren. Er kann sowohl unterhalb als auch oberhalb der Soll-Menge liegen oder gleich der Soll-Menge sein. Insbesondere kann es auch in Schritt c) zu einem Wechsel zwischen negativer und positiver Differenz zwischen Ist- und Soll-Menge am selben Tragkörper kommen, wenn durch die Korrektur über das Ziel hinausgeschossen wurde. Das Entfernen von noch feuchter Beschichtungssuspension, wenn die Ist-Menge größer als die Soll-Menge ist, kann sich also mit dem Aufbringen von zusätzlicher Beschichtungssuspension, wenn die Ist-Menge kleiner als die Soll-Menge ist, abwechseln.

Besonders vorteilhaft ist es jedoch, wenn sichergestellt wird, daß die Ist-Beschichtungsmenge unter Berücksichtigung der Schwankungsbreite des Beschichtungsprozesses in Schritt a) stets unterhalb oder oberhalb der Soll-Menge liegt. Es hat sich gezeigt, daß im ersten Fall der Prozeß so geführt werden kann, daß zur Annäherung an die Soll-Menge jeweils nur zusätzliche Beschichtungssuspension aufgebracht und im zweiten Fall in den Interationsschleifen nur Beschichtungssuspension entfernt werden muß. Ein Wechsel zwischen Aufbringen zusätzlicher Beschichtungssuspension und Entfernen von Beschichtungssuspension kann dann weitgehend ausgeschlossen werden. Die erste Verfahrensvariante ist dabei besonders bevorzugt, das heißt die Einstellung der Beschichtungsmenge in Schritt a) derart, daß bei allen Tragkörpern die in Schritt a) aufgebrachte Beschichtungsmenge unterhalb der geforderten Soll-Menge liegt.

Zur Bestimmung der Ist-Beschichtungsmenge in Schritt a) wird der Tragkörper bevorzugt vor und nach dem Beschichtungsvorgang gewogen. Nach der Korrektur der Beschichtungsmenge in Schritt c) wird der Tragkörper erneut gewogen, um die neue Ist-Menge durch Vergleichen mit der Wägung vor dem Beschichten in Schritt a) zu bestimmen und damit den Erfolg der Korrektur zu beurteilen und gegebenenfalls das Durchlaufen einer weiteren Iterationsschleife einzuleiten.

Bei negativer Differenz zwischen Ist- und Soll-Menge kann die zusätzliche Beschichtungssuspension auf die obere Stirnfläche des senkrecht ausgerichteten Tragkörpers aufgebracht werden. Anschließend kann diese zusätzliche Beschichtungssuspension durch Durchsaugen oder Durchblasen über die Länge des Tragkörpers verteilt werden.

Bei positiver Differenz zwischen Ist- und Soll-Beschichtungsmenge kann die Ist-Menge durch Absaugen oder Ausblasen an die geforderte Soll-Beschichtungsmenge angenähert werden. Intensität und/oder Dauer des Absaugens oder Ausblasens werden dabei in Abhängigkeit von der ermittelten Differenzmenge gewählt. Die Anpassung von Intensität und/oder Dauer der Absaugung oder des Ausblasens kann zum Beispiel darin bestehen, daß die entsprechenden Werte aus in Vorversuchen ermittelten Wertetabellen für die gemessene Ist-Menge ausgewählt werden. Alternativ können Intensität und/oder Dauer entsprechend den bei den unmittelbar zuvor beschichteten Körpern ermittelten Werten für Ist-Menge, Intensität und/oder Dauer und die damit erzielte Verminderung der Differenz zwischen Ist- und Soll-Menge geregelt werden, das heißt je nach Eingangsgewicht bzw. Abweichung von der geforderten Soll-Menge wird die Absaugung oder das Ausblasen in Schritt c) vorausschauend so eingestellt, daß die Ist-Menge dem Zielgewicht bzw. der Soll-Beschichtungsmenge im Tragkörper möglichst weitgehend angenähert wird.

Erfindungsgemäß wird also ein konventionelles Beschichtungsverfahren verwendet um eine Rohbeschichtung auf dem Tragkörper aufzubringen. Im Anschluß daran erfolgt eine Korrektur, in der ein etwaiges Zuviel oder Zuwenig (bezogen auf einen Zielwert bzw. die Soll-Menge) an Beschichtungssuspension abgesaugt beziehungsweise aufgebracht wird.

Nach Beendigung des Beschichtungsprozesses werden die beschichteten Tragkörper bei erhöhter Temperatur zwischen 80 und 200 °C für die Dauer von 5 Minuten bis 2 Stunden getrocknet und anschließend gewöhnlich bei Temperaturen zwischen 300 und 600 °C für die Dauer von 10 Minuten bis 5 Stunden calciniert. Die Calcinierung bewirkt eine gute Fixierung der Beschichtung auf dem Tragkörper und überführt eventuelle Vorläuferverbindungen in der Beschichtungssuspension in ihre endgültige Form.

Das vorgestellte Verfahren liefert bei der Beschichtung von Tragkörpern mit katalytisch aktiven Beschichtungen eine hervorragende Genauigkeit, das heißt eine geringe Schwankungsbreite, der Beschichtungskonzentration von Körper zu Körper. Die erhöhte Genauigkeit wird durch die erfindungsgemäße Korrektur in Schritt c) erhalten. Besonders vorteilhaft ist die Anwendung des Verfahrens für die Anfertigung von Mehrfachschichten auf den Tragkörpern. Die Schwankungsbreiten der einzelnen Beschichtungen addieren sich hierbei, so daß bei den konventionellen Verfahren mit erheblichen Schwankungsbreiten der fertigen Mehrfachbeschichtung gerechnet werden muß. Durch Anwendung des erfindungsgemäßen Verfahrens auf dieses Beschichtungsproblem können Mehrfachschichten mit deutlich verminderten Schwankungsbreiten der Beschichtungskonzentration gefertigt werden.

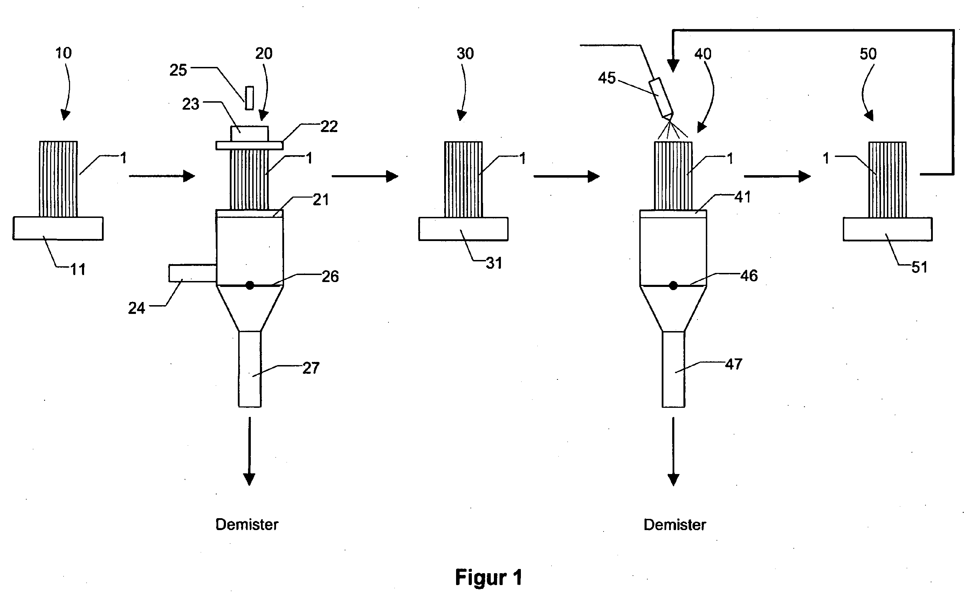

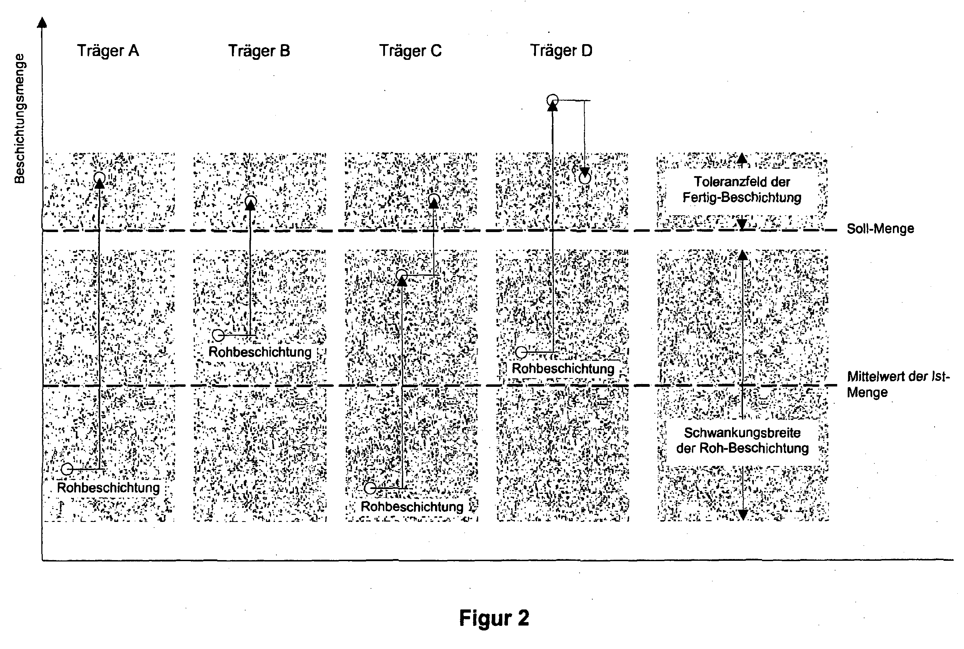

Bevorzugte Ausführungsformen der Vorrichtung bzw. des Verfahrens werden beispielhaft an Hand der Figuren 1 und 2 näher erläutert. Es zeigen:
- Figur 1:: prinzipielle Darstellung einer bevorzugten Beschichtungsanlage zur Durchführung des Verfahrens und
- Figur 2:: Schematische Darstellung des Beschichtungsverfahrens

Figur 1 zeigt den möglichen Aufbau einer für das Verfahren geeigneten Beschichtungsanlage. Die Beschichtungsanlage weist vorzugsweise eine Beschichtungsstation 20 zur Herstellung der Roh-Beschichtung auf. Zu diesem Zweck wird der zu beschichtende Tragkörper 1 auf den dafür vorgesehenen Halteelementen abgesetzt, vgl. Figur 1. Durch Aufblasen einer aufblasbaren Gummimanschette 21 wird der Tragkörper 1 auf der Station fixiert und abgedichtet. Weiterhin kann eine zweite Dichtungsmanschette 22 vorgesehen sein, die auf das obere Ende des Tragkörpers 1 aufgebracht wird, um einen Überlauf 23 dicht zu fixieren. Vorzugsweise oberhalb ist ein Füllsensor 25 angeordnet, über den die ausreichende Befüllung des Tragkörpers 1 detektiert wird und der dementsprechend ein Signal an die Vorrichtungssteuerung bzw. Regelung der Beschichtungsanlage gibt.

Zur Anfertigung der Roh-Beschichtung wird die Beschichtungssuspension über die Zuleitung 24 von unten in den Tragkörper eingepumpt, bis der Füllsensor das Erreichen einer festgelegten Füllhöhe meldet. Danach wird der Tragkörper von überschüssiger Beschichtungssuspension in den Kanälen durch Öffnen einer Absaug- bzw. Drosselklappe 26 befreit. Hierzu ist eine Rohrleitung 27 mit einem hier nicht gezeigten Unterdruckgefäß und einem Demister verbunden. Das Unterdruckgefäß ist mit einem Gebläse verbunden, welches einen Unterdruck zwischen vorzugsweise 50 und 500 und besonders bevorzugt 300 mbar aufrecht erhält. Intensität und Dauer der Absaugung können mit Hilfe der Drosselklappe 26 eingestellt werden. Sie bestimmen die auf dem Tragkörper verbreibende Roh-Beschichtungsmenge. Außerdem dient dieser Vorgang dazu, eventuell durch Beschichtungssuspension verstopfte Kanäle zu öffnen.

Figur 1 zeigt weiterhin eine Wiegestation 30, in der der beschichtete Tragkörper 1 auf einer Waage 31 gewogen wird. Auf diese Weise kann die Menge der Beschichtungssuspension im Tragkörper 1 ermittelt werden. Zusätzlich kann eine der Beschichtungsstation 20 vorgeschaltete Wiegestation 10 mit Waage 11 vorgesehen sein, die das Gewicht des Tragkörpers 1 vor der Beschichtung bestimmt.

Sollte sich nun in der Wiegestation 30 herausstellen, daß die Beladung des Tragkörpers 1 mit Beschichtungssuspension außerhalb des Toleranzfeldes für die Fertig-Beschichtung liegt, wird der Tragkörper auf eine Korrekturstation 40 befördert. In der Korrekturstation kann sowohl zuviel aufgebrachte Beschichtungssuspension durch eine Nachabsaugung über die Absaugleitung 46 entfernt, als auch zuwenig aufgebrachte Beschichtungssuspension über die Sprühdüse 45 ergänzt werden.

In der Korrekturstation 40 befindet sich, ähnlich der Beschichtungsstation 20, eine Dichtungsmanschette 41, die den Tragkörper 1 dicht auf der Korrekturstation 40 fixiert. Über eine Absaugklappe 46 kann die Menge der abgesaugten Beschichtungssuspension gesteuert bzw. geregelt werden. Hierzu ist eine Rohrleitung 47 mit einem hier nicht gezeigten Unterdruckgefäß und einem Demister verbunden. Sollte dagegen in der Wiegestation 30 festgestellt werden, daß die aufgebrachte Beschichtungsmenge schon innerhalb des Toleranzfeldes der Fertig-Beschichtung liegt, so wird der Tragkörper ohne Korrektur der Beschichtungsmenge aus der Beschichtungsanlage ausgeschleust und einer hier nicht dargestellten Trocknungs- und Calcinierstation zugeführt.

Nach der Korrektur erfolgt besonders bevorzugt ein weiteres Wiegen des Tragkörpers 1 in der Wiegestation 30 oder in einer weiteren Wiegestation 50 mit einer Waage 51, wie in Figur 1 dargestellt. Sollte bei der weiteren Kontrolle der Menge der Beschichtungssuspension auf dem Tragkörper 1 festgestellt werden, daß die Ist-Beschichtungsmenge noch immer außerhalb des Toleranzfeldes der Fertig-Beschichtung liegt, kann der Tragkörper nochmals in die Korrekturstation 40 befördert werden. Andernfalls wird der Tragkörper aus der Beschichtungsanlage ausgeschleust und der Trocknungs- und Calcinierstation zugeführt.

Die Wiegestationen 30 und 50 können, wie bereits angedeutet, zusammengelegt werden, abhängig von der gewünschten Flexibilität bzw. Geschwindigkeit der gesamten Anlage. Weiterhin können die Wiegestation 30 bzw. 50 mit der Nachsaugstation 40 oder der Beschichtungsstation 20 kombiniert werden.

Figur 2 zeigt eine schematische Darstellung der Vorgänge bei der erfindungsgemäßen Beschichtung von vier Tragkörpern A, B, C und D.

Die zur Erreichung einer katalytischen Mindestaktivität erforderliche Beschichtungsmenge ist in Figur 2 als "Soll-Menge" bezeichnet. Keiner der beschichteten Tragkörper darf nach Abschluß des Beschichtungsverfahrens eine Beschichtungsmenge unterhalb der Soll-Menge aufweisen. Daher liegt das zulässige Toleranzfeld für die Fertig-Beschichtung direkt oberhalb der Soll-Menge.

In Figur 2 ist angenommen, daß das Beschichtungsverfahren so eingestellt wurde, daß der damit erreichbare Mittelwert der Ist-Beschichungsmengen unterhalb der Soll-Beschichtungsmenge liegt und zwar in einem Abstand, der größer als die halbe Schwankungsbreite der Roh-Beschichtung ist. Die Roh-Beschichtungsmengen der Tragkörper A bis D liegen daher alle unterhalb der Soll-Menge. Die Schwankungsbreite der Roh-Beschichtungsmenge ist deutlich größer als das angestrebte Toleranzfeld der Fertig-Beschichtung.

Erfindungsgemäß werden die Roh-Beschichtungsmengen durch Anbringen einer Korrektur in das Toleranzfeld der Fertig-Beschichtung angehoben. Im Falle der Tragkörper A und B geschieht das mit einer einzigen Korrektur. Im Falle von Tragkörper C reicht die erste Korrektur aufgrund von Schwankungen des Prozesses nicht aus, um mit der Beschichtungsmenge in das Toleranzfeld der Fertig-Beschichtung zu gelangen. Daher ist hier eine zweite Korrektur erforderlich. Im Falle von Tragkörper D ist die erste Korrektur über das Ziel hinausgeschossen. Die im ersten Korrekturschritt zusätzlich aufgebrachte Beschichtungsmenge hat die fehlende Beschichtungsmenge überkompensiert. Daher muß durch die zweite Korrektur wieder etwas Beschichtungssuspension vom Tragkörper entfernt werden.

Bei der Darstellung in Figur 2 ist davon ausgegangen worden, daß der Mittelwert der Ist-Menge unterhalb der Soll-Menge liegt. Das Verfahren ist jedoch auch analog für Mittelwerte der Ist-Menge geeignet, die oberhalb der Soll-Menge oder direkt im Toleranzfeld der Fertig-Beschichtung liegen.

Auch wenn das vorgestellte Verfahren in der Lage ist, die auf einen Tragkörper aufgebrachte Beschichtungsmenge iterativ in das gewünschte Toleranzfeld der Soll-Beschichtung zu legen, so wird doch in einer bevorzugten Ausführungsform des Verfahrens stets angestrebt, mit einer einzigen Korrektur der Beschichtungsmenge das gewünschte Ziel zu erreichen.

## Patentansprüche

1. Verfahren zum Beschichten einer Serie von zylindrischen, offenporigen Körpern mit mindestens einer Beschichtungssuspension, welche insbesondere feste und gelöste Stoffe in einem flüssigen Medium aufweist, mit einer Menge im nassen Zustand, die mindestens einer geforderten Soll-Menge entspricht, wobei der Beschichtungsvorgang eine Schwankungsbreite der aufgebrachten Naß-Beschichtungsmenge von Körper zu Körper aufweist und die folgenden Verfahrensschritte enthält:
a) Anfertigen einer Roh-Beschichtung durch Beschichten der Körper mit der Beschichtungssuspension, wozu die Körper mit ihrer Zylinderachse senkrecht ausgerichtet und mit einer Stirnfläche auf eine Beschichtungsstation aufgesetzt und dann von unten mittels einer Pumpe oder aus einem unter Druck stehenden Reservoir mit der Beschichtungssuspension gefüllt und anschließend von überschüssiger Beschichtungssuspension durch Auspumpen, Aussaugen, Ausblasen oder eine Kombination dieser Aktionen befreit werden, und
b) Ermitteln der Ist-Menge der auf den Körpern aufgebrachten Roh-Beschichtung,
wobei das Verfahren durch einen weiteren Verfahrensschritt gekennzeichnet ist:
c) Korrigieren der Ist-Menge durch Entfernen von noch feuchter Beschichtungssuspension oder Aufbringen zusätzlicher Beschichtungssuspension, so daß die Beschichtungsmenge der fertigen Beschichtung innerhalb eines Toleranzfeldes oberhalb der Soll-Menge zu liegen kommt, dessen Breite geringer ist als die Schwankungsbreite der Roh-Beschichtung.

2. Verfahren nach Anspruch 1, wobei die Ist-Menge durch Wiegen der Körper vor und nach dem Beschichten in Schritt (a) ermittelt wird.

3. Verfahren nach Anspruch 1, wobei die Schritte b) und c) gegebenenfalls in mehreren Iterationsschleifen durchlaufen werden, bis die geforderte Genauigkeit der Beschichtungsmenge erreicht ist.

4. Verfahren nach Anspruch 3, wobei die jeweilige Ist-Menge durch Wiegen der Körper nach einem Iterationsschritt und Vergleichen mit der Wägung vor dem Beschichten ermittelt wird.

5. Verfahren nach Anspruch 4, wobei der Tragkörper zwischen zwei Iterationsschleifen um 180° um eine horizontale Achse gedreht wird.

6. Verfahren nach Anspruch 1, wobei in Schritt c) bei negativer Differenz zwischen Ist- und Soll-Menge die Ist-Menge durch Aufbringen zusätzlicher Beschichtungssuspension auf eine obere Stirnfläche des Tragkörpers an die geforderte Soll-Menge angenähert und die zusätzliche Beschichtungssuspension anschließend durch Durchsaugen oder Durchblasen über die Länge des Tragkörpers verteilt wird.

7. Verfahren nach Anspruch 1, wobei in Schritt c) bei positiver Differenz zwischen Ist- und Soll-Menge die Ist-Menge durch Absaugen oder Ausblasen von noch feuchter Beschichtungssuspension an die geforderte Soll-Menge angenähert wird.

8. Verfahren nach Anspruch 7, wobei Dauer und/oder Intensität der Absaugung oder des Ausblasens aus in Vorversuchen ermittelten Wertetabellen für die gemessene Ist-Menge ausgewählt werden.

9. Verfahren nach Anspruch 8, wobei Dauer und/oder Intensität der Absaugung oder des Ausblasens entsprechend den bei den unmittelbar zuvor beschichteten Körpern ermittelten Werten für Ist-Menge, Dauer und/oder Intensität der Absaugung oder des Ausblasens und die damit erzielte Verminderung der Differenz zwischen Ist- und Soll-Menge geregelt werden.

10. Verfahren nach Anspruch 1, wobei nach Schritt (c) die Beschichtung des Tragkörpers getrocknet und calciniert wird.

11. Vorrichtung zum Beschichten einer Serie von zylindrischen, offenporigen Körpern mit mindestens einer Beschichtungssuspension, welche insbesondere feste und gelöste Stoffe in einem flüssigen Medium aufweist, mit einer Menge im nassen Zustand, die mindestens einer geforderten Soll-Menge entsprechen soll, wobei der Beschichtungsvorgang eine Schwankungsbreite der aufgebrachten Naß-Beschichtungsmenge von Körper zu Körper aufweist, insbesondere für ein Verfahren nach mindestens einem der vorhergehenden Ansprüche, mit:
(a) einer ersten Wiegestation (10) zum Ermitteln des Gewichtes des Körpers vor dem Beschichten,
(b) einer Einrichtung (20) zum Beschichten des Körpers,
(c) einer zweiten Wiegestation (30) zum Ermitteln des Gewichtes des Körpers nach dem Beschichten,
(d) einer Einrichtung (40) zur Korrektur der Beschichtungsmenge durch Entfernen von noch feuchter Beschichtungssuspension durch Ausblasen oder Aussaugen, wenn die Ist-Menge oberhalb des Toleranzfeldes für die fertige Beschichtung liegt und durch Aufbringen von zusätzlicher Beschichtungssuspension mittels einer Sprühdüse (45) auf eine obere Stirnfläche des Körpers, wenn die Ist-Menge unterhalb des Toleranzfeldes für die fertige Beschichtung liegt, und
(e) einer dritten Wiegestation (50) zum Ermitteln der Ist-Menge nach Korrektur der Beschichtungsmenge in der Einrichtung (40).

## Claims

1. Method for coating a series of cylindrical, open-pore bodies with at least one coating suspension, which in particular contains solid and dissolved substances in a liquid medium, with a quantity in the wet state which at least corresponds to a required set quantity, the coating operation having a fluctuation range in the wet coating quantity applied from body to body and comprising the following method steps:
a) producing a primary coating by coating the bodies with the coating suspension, for which purpose the bodies are oriented with their cylinder axis upright, their end face is placed onto a coating station, and then they are filled with the coating suspension from below by means of a pump or from a pressurized reservoir, and then excess coating suspension is removed therefrom by pumping, sucking, blowing or a combination of these actions, and
b) determining the actual quantity of primary coating applied to the bodies,
the method being **characterized by** a further method step:
c) correcting the actual quantity by removing coating suspension that is still wet or applying additional coating suspension, so that the coating quantity of the finished coating is within a tolerance range above the set quantity, the extent of which tolerance range is less than the fluctuation range of the primary coating.

2. Method according to Claim 1, in which the actual quantity is determined by weighing the bodies before and after the coating operation in step a).

3. Method according to Claim 1, in which steps b) and c) are if appropriate passed through in a plurality of iteration loops until the required accuracy of the coating quantity is reached.

4. Method according to Claim 3, in which the respective actual quantity is determined by weighing the bodies after an iteration step and comparing this with the weight prior to coating.

5. Method according to Claim 4, in which the carrier body is rotated through 180° about a horizontal axis between two iteration loops.

6. Method according to Claim 1, in which in step c), if there is a negative difference between the actual quantity and set quantity, the actual quantity is brought closer to the required set quantity by applying additional coating suspension to an upper end face of the carrier body, and the additional coating suspension is then distributed over the length of the carrier body by being sucked or blown through it.

7. Method according to Claim 1, in which in step c), if there is a positive difference between actual quantity and set quantity, the actual quantity is brought closer to the required set quantity by sucking or blowing out coating suspension that is still wet.

8. Method according to Claim 7, in which the duration and/or intensity of the sucking or blowing are selected from tables of values for the measured actual quantity, determined in preliminary tests.

9. Method according to Claim 8, in which the duration and/or intensity of the sucking or blowing are controlled as a function of the values for actual quantity, duration and/or intensity of the sucking or blowing and the resulting reduction in the difference between actual quantity and set quantity determined for the bodies coated immediately beforehand.

10. Method according to Claim 1, in which the coating of the carrier body is dried and calcined after step c).

11. Apparatus for coating a series of cylindrical, open-pore bodies with at least one coating suspension, which in particular includes solid and dissolved substances in a liquid medium, with a quantity in the wet state which is intended to correspond at least to a required set quantity, the coating operation having a fluctuation range for the wet coating quantity applied from body to body, in particular for a method according to at least one of the preceding claims, the apparatus comprising:
(a) a first weighing station (10) for determining the weight of the body prior to coating,
(b) a device (20) for coating the body,
(c) a second weighing station (30) for determining the weight of the body after coating,
(d) a device (40) for correcting the coating quantity by removing coating suspension that is still wet by blowing or sucking if the actual quantity is above the tolerance range for the finished coating and by applying additional, coating suspension by means of a spray nozzle (45) to an upper end face of the body if the actual quantity is below the tolerance range for the finished coating, and
(e) a third weighing station (50) for determining the actual quantity after correction of the coating quantity in the device (40).

## Revendications

1. Procédé pour enduire une série de corps cylindriques à pores ouverts à l'aide d'au moins une suspension de revêtement comportant notamment des substances solides et des substances dissoutes dans un agent liquide, avec une quantité à l'état mouillé correspondant à au moins une quantité théorique requise, le processus de revêtement présentant une plage d'écart de la quantité de revêtement mouillé appliquée de corps à corps et contenant les étapes de procédé suivantes :
a) préparation d'un revêtement brut par revêtement des corps avec une suspension de revêtement, les corps étant orientés à cette fin perpendiculairement avec leur axe de cylindre et placés avec une surface avant sur une station de revêtement puis remplis de suspension de revêtement par en bas grâce à une pompe ou à partir d'un réservoir sous pression avant d'être libérés de la suspension de revêtement en surplus par pompage, aspiration, soufflage ou une combinaison de ces actions ; et
b) calcul de la quantité réelle de revêtement brut appliquée sur les corps ;
le procédé étant **caractérisé par** une étape de procédé supplémentaire :
c) correction de la quantité réelle par retrait de la suspension de revêtement encore humide ou par application d'un supplément de suspension de revêtement, de sorte que la quantité de revêtement du revêtement fini se situe à l'intérieur d'une plage de tolérance par rapport à la quantité théorique dont l'ampleur est plus réduite que la plage d'écart du revêtement brut.

2. Procédé selon la revendication 1, la quantité réelle étant calculée par pesée des corps avant et après le revêtement réalisé à l'étape (a).

3. Procédé selon la revendication 1, les étapes b) et c) étant exécutées le cas échéant en plusieurs boucles itératives jusqu'à ce que la précision requise soit atteinte pour la quantité de revêtement.

4. Procédé selon la revendication 3, la quantité réelle respective étant calculée par pesée des corps après une étape itérative et par comparaison avec la pesée réalisée avant le revêtement.

5. Procédé selon la revendication 4, le support étant pivoté de 180° autour d'un axe horizontal entre deux boucles itératives.

6. Procédé selon la revendication 1, sachant qu'à l'étape c), en présence d'une différence négative entre la quantité réelle et théorique, la quantité réelle est amenée à approcher la quantité théorique requise par application d'un supplément de suspension de revêtement sur une surface avant supérieure du support et que le supplément de suspension de revêtement est ensuite réparti par aspiration traversante ou soufflage traversant sur l'ensemble de la longueur du support.

7. Procédé selon la revendication 1, sachant qu'à l'étape c), en présence d'une différence positive entre la quantité réelle et théorique, la quantité réelle est amenée à approcher la quantité théorique requise par aspiration ou soufflage de la suspension de revêtement encore humide.

8. Procédé selon la revendication 7, la durée et/ou l'intensité de l'aspiration ou du soufflage étant sélectionnées dans des tables de valeurs calculées lors d'essais préalables pour la quantité réelle mesurée.

9. Procédé selon la revendication 8, la durée et/ou l'intensité de l'aspiration ou du soufflage étant réglés en fonction des valeurs, calculées pour les corps revêtus juste avant, de la quantité réelle, la durée et/ou l'intensité de l'aspiration ou du soufflage et la réduction ainsi obtenue de la différence entre la quantité réelle et théorique.

10. Procédé selon la revendication 1, le revêtement du support étant séché et calciné après l'étape (c).

11. Dispositif pour enduire une série de corps cylindriques à pores ouverts à l'aide d'au moins une suspension de revêtement comportant notamment des substances solides et des substances dissoutes dans un agent liquide, avec une quantité à l'état mouillé devant correspondre à au moins une quantité théorique requise, le processus de revêtement présentant une plage d'écart de la quantité de revêtement mouillé appliquée de corps à corps, notamment pour un procédé selon au moins l'une quelconque des revendications précédentes, avec :
(a) une première station de pesée (10) servant à calculer le poids du corps avant le revêtement ;
(b) un dispositif (20) servant à enduire le corps;
(c) une deuxième station de pesée (30) servant à calculer le poids du corps après le revêtement ;
(d) un dispositif (40) servant à corriger la quantité de revêtement par retrait de la suspension de revêtement encore humide par soufflage ou aspiration, lorsque la quantité réelle dépasse la plage de tolérance du revêtement fini et à appliquer un supplément de suspension de revêtement à l'aide d'une buse de pulvérisation (45) sur une surface avant supérieure du corps lorsque la quantité réelle est inférieure à la plage de tolérance du revêtement fini; et
(e) une troisième station de pesée (50) servant à calculer la quantité réelle après correction de la quantité de revêtement dans le dispositif (40).
